# FASCICULE DE BREVET EUROPEEN

(11) **EP 3 970 241 B1**
(45) Date de publication et mention de la délivrance du brevet: **15.10.2025**
(21) Numéro de dépôt: 20740702.4
(22) Date de dépôt: 12.05.2020
(51) Int. Cl.: H01R 13/629, B60L 53/16

(54) **SYSTÈME DE SOCLE DE CONNEXION ÉLECTRIQUE**
MONTAGESYSTEM FÜR ELEKTRISCHE VERBINDUNG
ELECTRICAL CONNECTION MOUNT SYSTEM

(30) Priorité: 13.05.2019 FR 1904938
(43) Date de publication de la demande: 23.03.2022
(73) Titulaire: Marechal Electric, 94410 Saint-Maurice (FR)
(72) Inventeur: GALLAND, Julien, 77270 VILLEPARISIS (FR); PILLARD, Romain, 77590 CHARTRETTES (FR); ZAGROUN, Francis, 92200 NEUILLY SUR SEINE (FR)
(74) Mandataire: Cabinet Beau de Loménie
(86) Numéro de dépôt international: PCT/FR2020/050780
(87) Numéro de publication internationale: WO 2020/229768

(56) Documents cités:
- DE-A1- 102010 040 787
- US-A- 5 076 622

## Description

### Domaine Technique

Le présent exposé concerne un système de socle de connexion électrique comprenant un socle de connexion électrique et un mécanisme de verrouillage commandé configuré pour verrouiller/déverrouiller un socle complémentaire de connexion électrique connecté avec le socle de connexion électrique. Le présent exposé concerne également un ensemble comprenant un tel système de socle de connexion électrique et un socle complémentaire de connexion électrique

### Technique antérieure

Les systèmes de socle de connexion électrique connus sont généralement chers, présentent un encombrement important et posent parfois des problèmes de fiabilité. En effet, les systèmes connus présentent généralement un électroaimant surdimensionné pour assurer une fiabilité acceptable, mais d'une part une telle conception s'avère coûteuse tandis que l'encombrement général est important, et d'autre part il arrive parfois que l'électroaimant soit malgré tout détérioré au bout d'un certain temps d'usage. Il existe donc un besoin en ce sens. Le document DE102010040787 présente ainsi un exemple de système de socle de connexion électrique connu.

### Exposé de l'invention

Un mode de réalisation concerne un système de socle de connexion électrique tel que défini par la revendication 1, comprenant un socle de connexion électrique et un mécanisme de verrouillage commandé configuré pour verrouiller/déverrouiller un socle complémentaire de connexion électrique connecté avec le socle de connexion électrique, le mécanisme de verrouillage comprenant au moins un premier levier et un deuxième levier, et un électroaimant, le premier levier formant un loquet mobile entre une position de verrouillage et une position de déverrouillage tandis que le deuxième levier est mécaniquement couplé à l'électroaimant et coopère avec le premier levier, grâce à quoi un actionnement de l'électroaimant permet de déplacer le premier levier depuis la position de verrouillage vers la position de déverrouillage

On comprend que le socle de connexion électrique peut être un socle de prise ou un socle de connecteur, tandis que le socle complémentaire de connexion électrique peut être un socle de connecteur ou un socle de prise, respectivement. Par la suite et sauf indication contraire par « socle » on entend « socle de connexion électrique », par « socle complémentaire » on entend « socle complémentaire de connexion électrique » et par « les socles » on entend « le socle de connexion électrique et le socle complémentaire de connexion électrique ».

De manière générale, on rappelle qu'un socle de prise forme une partie femelle qui peut appartenir à une prise de courant (où le socle de prise est en général solidaire d'un mur, d'un boitier, ou équivalent), un prolongateur, ou un connecteur (où le socle de prise fait en général partie d'une prise) tandis qu'un socle de connecteur forme une partie mâle qui peut appartenir à une prise de courant (où le socle de connecteur fait en général partie de la fiche), un prolongateur, ou un connecteur (où le socle de connecteur est en général solidaire d'un appareil, d'un boitier, ou équivalent).

On rappelle également que de manière générale, une prise comprend un socle de prise et une poignée ou capotage solidaire dudit socle de prise ; une fiche comprend un socle de connecteur et une poignée ou capotage solidaire dudit socle de connecteur ; un prolongateur est un ensemble comprenant une prise et une fiche ; une prise de courant est un ensemble comprenant un socle de prise et une fiche ; un connecteur est un ensemble comprenant une prise et un socle de connecteur. De manière générale, les socles de connexion électrique peuvent, en plus de raccorder des lignes de courant électrique de puissance, permettre de raccorder d'autres lignes, comme par exemple des lignes de transfert de données, des conduites de fluides, par exemple des gaz, etc.

Les socles peuvent être du type « à contact en bout » ou du type « à contact alvéolaire ». Un contact en bout est un contact où la liaison électrique avec un contact complémentaire, par exemple une broche, est assurée par une face de contact sensiblement perpendiculaire à la direction axiale. Un tel contact est configuré pour coopérer en butée avec une face complémentaire, par exemple une face d'extrémité distale d'une broche, le contact entre ces deux faces étant généralement réalisé avec une certaine pression pour garantir le passage de courant d'un contact à l'autre. Un contact alvéolaire est un contact où la liaison électrique avec un contact complémentaire, par exemple une broche, est assurée par une chemise coaxiale avec la broche.

Le système comprend deux leviers, à savoir le premier levier et le deuxième levier, ou plus de deux leviers. Le deuxième levier peut coopérer directement ou indirectement avec le premier levier. Par exemple, dans le cas où le système comprend plus de deux leviers, le deuxième levier peut coopérer avec le premier levier par l'intermédiaire d'un ou plusieurs autres leviers. Par la suite, et sauf indication contraire, par « les leviers », on entend « les au moins un premier levier et un deuxième levier ».

On comprend que l'électroaimant permet d'actionner le deuxième levier, qui lui-même coopère avec le premier levier, grâce à quoi on déplace le premier levier depuis la position de verrouillage dans la position de déverrouillage. Ceci permet de libérer le socle complémentaire qui était verrouillé grâce au premier levier. Par exemple, dans le cas d'une connexion électrique à contact en bout, les ressorts de compression du contact en bout permettent, lorsque le premier levier passe en position de déverrouillage d'éjecter automatiquement le socle complémentaire du socle. Selon un autre exemple, dans le cas d'une connexion électrique par contact alvéolaire, un ressort d'éjection prévu sur un des socles permet lorsque le premier levier passe en position de déverrouillage d'éjecter automatiquement le socle complémentaire du socle. Par exemple, l'actionnement de l'électroaimant permet de déplacer le premier levier uniquement depuis la position de verrouillage vers la position de déverrouillage. Ceci permet de simplifier encore le système et de renforcer sa robustesse.

Par exemple, le système de socle de connexion électrique est monté sur un véhicule pour permettre l'alimentation électrique de divers appareils électriques du véhicule, notamment lorsque le véhicule est à l'arrêt. L'électroaimant est par exemple couplé au démarreur et/ou au frein du véhicule. Ainsi, lorsqu'on démarre le véhicule, le premier levier est actionné, grâce à quoi l'éventuel socle complémentaire connecté au socle est éjecté lors du démarrage du véhicule, et le véhicule peut partir sans risque d'endommagement de ligne d'alimentation électrique.

Par exemple, le système de socle de connexion électrique forme un système à commande électrique ou un système à commande (électrique) à distance.

La structure à deux leviers permet de gérer des efforts relativement importants, tout en ayant un électroaimant de taille/puissance modeste. Par ailleurs, on peut plus facilement prévoir un dimensionnement adéquat, y compris avec des risques de sollicitations élevés, d'un électroaimant de taille/puissance modeste qu'un gros électroaimant, tout en maitrisant les coûts de production. Un tel système de socle de connexion électrique est donc peu onéreux, de faible encombrement et fiable.

Le mécanisme de verrouillage comprend un rupteur configuré pour couper un circuit d'alimentation électrique de l'électroaimant lorsque le premier levier est en position de déverrouillage et pour connecter l'électroaimant au circuit d'alimentation électrique lorsque le premier levier est en position de verrouillage

Un rupteur est un appareil destiné à l'ouverture ou à la fermeture d'un circuit électrique et dont le ou les éléments mobiles de contact n'ont qu'une position de repos. Dans cet exemple, en position de repos, le rupteur est configuré pour ouvrir le circuit d'alimentation électrique de l'électroaimant.

Un tel rupteur permet de fiabiliser le mécanisme de verrouillage en évitant que l'électroaimant soit sollicité inutilement, par exemple lorsque le premier levier est en position de déverrouillage. Par exemple, lorsque le système est monté sur un véhicule et qu'il est couplé au frein du véhicule, l'électroaimant est sollicité chaque fois que le conducteur actionne le frein. Ceci sollicite inutilement l'électroaimant, ce qui est source de panne et/ou détérioration de l'électroaimant. Grâce au rupteur, lorsque le premier levier est en position de déverrouillage, l'alimentation électrique de l'électroaimant est coupée de sorte que ce dernier n'est sollicité que lorsque cela est nécessaire, c'est-à-dire que lorsque le premier levier est en position de verrouillage, i.e. lorsqu'un socle complémentaire est verrouillé avec le socle. On peut considérer que le rupteur forme un capteur de position du premier levier.

Dans certains modes de réalisation, le deuxième levier présente une extrémité distale formant crochet et configurée pour coopérer avec le premier levier en position de verrouillage, le deuxième levier étant mobile entre une position de crochetage dans laquelle il est configuré pour bloquer le premier levier en position de verrouillage et une position de libération dans laquelle il est configuré pour libérer le premier levier.

Par exemple, lorsque le système présente uniquement un premier et un deuxième levier, lorsqu'on branche un socle complémentaire avec le socle, le premier levier est déplacé depuis la position de déverrouillage vers la position de verrouillage tandis qu'il s'engage simultanément et directement avec le crochet du deuxième levier, qui est alors en position de crochetage. Lorsque le système présente plus de deux levier, on comprend que le deuxième levier crochète/libère indirectement le premier levier, par l'intermédiaire d'un ou plusieurs autres leviers. Une telle structure est robuste, fiable, présente un faible encombrement tout en étant peu onéreuse.

Dans certains modes de réalisation, le premier levier et le deuxième levier sont mobiles dans un même plan.

Une telle configuration permet d'encore réduire l'encombrement général.

Dans certains modes de réalisation, l'électroaimant s'étend dans ledit plan.

Par exemple l'électroaimant présente une bobine, l'axe de cette bobine s'étendant dans ledit plan. Une telle configuration permet d'encore réduire l'encombrement général.

Dans certains modes de réalisation, le premier levier présente une première extrémité distale configurée pour coopérer avec un socle complémentaire de connexion électrique, une deuxième extrémité distale configurée pour coopérer avec le deuxième levier, et un premier axe de rotation, la distance D1 entre la première extrémité distale et le premier axe de rotation étant plus petite que la distance D2 entre la deuxième extrémité distale et le premier axe de rotation, et dans lequel le deuxième levier présente une troisième extrémité distale configurée pour coopérer avec la deuxième extrémité distale du premier levier, une quatrième extrémité distale couplée avec l'électroaimant, et un deuxième axe de rotation, la distance D3 entre la troisième extrémité distale et le deuxième axe de rotation étant plus petite que la distance D4 entre la quatrième extrémité distale et le deuxième axe de rotation.

On comprend que l'axe de rotation de chaque levier est distant des extrémités distales dudit levier. Une telle configuration permet d'assurer une chaine de transmission d'efforts permettant de réduire la taille/puissance de l'électroaimant. Ceci permet tant de réduire les coûts de fabrication que l'encombrement, tout en permettant de fiabiliser le système.

Dans certains modes de réalisation, 2xD1 < D2, par exemple 3xD1 < D2, tandis que 2xD3 < D4.

De tels ratios permettent d'encore réduire la taille/puissance de l'électroaimant et donc les coûts de fabrication et l'encombrement, tout en permettant de fiabiliser le système.

Dans certains modes de réalisation, le mécanisme de verrouillage comprend un premier élément de rappel configuré pour ramener le premier levier depuis la position de verrouillage vers la position de déverrouillage.

Par exemple, le premier élément de rappel est un ressort, par exemple un ressort à torsion monté autour du premier axe de rotation. Le premier élément de rappel permet de maintenir par défaut le premier levier dans la position de déverrouillage, ce qui participe à assurer la fiabilité du système. Ceci facilite l'éjection du socle complémentaire, et permet de positionner automatiquement le premier levier en position de déverrouillage, prêt à coopérer avec un nouveau socle complémentaire.

Dans certains modes de réalisation, le deuxième levier est mobile entre une position de crochetage dans laquelle il est configuré pour bloquer le premier levier en position de verrouillage et une position de libération dans laquelle il est configuré pour libérer le premier levier, le mécanisme de verrouillage comprenant un deuxième élément de rappel configuré pour ramener le deuxième levier depuis la position de libération vers la position de crochetage.

Par exemple, le deuxième élément de rappel est un ressort, par exemple un ressort à torsion monté autour du deuxième axe de rotation. Le deuxième élément de rappel permet de maintenir par défaut le deuxième levier dans la position de crochetage, ce qui participe à assurer la fiabilité du système. En effet, le deuxième levier forme ainsi un cliquet qui est configuré pour crocheter le premier levier par défaut. L'action de l'électroaimant permet de déplacer le deuxième levier vers la position de libération tandis que le deuxième élément de rappel ramène le deuxième levier en position de crochetage après l'action de l'électroaimant. Ainsi, il n'y a besoin d'aucun apport d'énergie pour que le deuxième levier bloque le premier levier dans la position de verrouillage.

Dans certains modes de réalisation, l'électroaimant présente un facteur de marche inférieur ou égal à 10%.

Le facteur de marche FM (en%) correspond à un rapport entre la durée totale effective maximum d'alimentation (i.e. de mises sous tension) de l'électroaimant (Du) sur une durée de référence (Dt) à +35°C. Dt est une durée de référence propre à chaque électroaimant, qui est généralement comprise entre 2 min et 5 min. En d'autres termes, FM = Du/DT x 100.

Le mécanisme de verrouillage selon le présent exposé permet une utilisation fiable d'un tel électroaimant. Un électroaimant ayant facteur de marche inférieur ou égal à 10% présente un encombrement plus faible qu'un électroaimant ayant un facteur de marche plus important.

Dans certains modes de réalisation, le mécanisme de verrouillage comprend une commande manuelle mécanique de déverrouillage configurée pour déplacer le premier levier depuis la position de verrouillage vers la position de déverrouillage.

La commande manuelle permet de déverrouiller manuellement, i.e. sans actionner l'électroaimant, un éventuel socle complémentaire connecté au socle. Par exemple, le système de socle de connexion électrique forme un système à commande électrique/manuelle. La commande manuelle peut coopérer directement avec le premier levier, ou indirectement, par exemple via le deuxième levier. Ceci permet d'éviter d'actionner l'électroaimant pour retirer un éventuel socle complémentaire connecté au socle, par exemple lorsque le véhicule est à l'arrêt. On évite donc de solliciter l'électroaimant inutilement, ce qui participe à fiabiliser le système.

Un mode de réalisation concerne également un ensemble comprenant un système de socle connexion électrique selon l'un quelconque des modes de réalisation décrits dans le présent exposé, et un socle complémentaire de connexion électrique, le socle complémentaire de connexion électrique comprenant un élément de verrouillage configuré pour coopérer avec le premier levier lorsque le socle complémentaire de connexion électrique est connecté avec le socle de connexion électrique afin de verrouiller la connexion entre le socle complémentaire de connexion électrique et le socle de connexion électrique.

On comprend que l'élément de verrouillage s'engage avec le premier levier formant loquet lorsque le socle complémentaire est connecté avec le socle. Par exemple, le socle complémentaire et le socle forment un connecteur ou une prise de courant, le socle complémentaire étant mobile et monté avec une poignée tandis que le socle est monté sur un boitier au sein du système de socle de connexion électrique, le boitier étant par exemple monté sur un véhicule.

### Brève description des dessins

L'objet du présent exposé et ses avantages seront mieux compris à la lecture de la description détaillée faite ci-après de différents modes de réalisation donnés à titre d'exemples non limitatifs. Cette description fait référence aux pages de figures annexées, sur lesquelles :
[Fig. 1] La figure 1 représente un véhicule équipé d'un ensemble comprenant un système de socle de connexion électrique et un socle complémentaire de connexion électrique connectés,
[Fig. 2] La figure 2 représente l'ensemble déconnecté,
[Fig. 3] La figure 3 représente l'ensemble déconnecté, les socles étant en approche pour leur connexion,
[Fig.4] La figure 4 représente une vue en coupe selon le plan IV de la figure 3 du mécanisme de verrouillage, le premier levier étant en position déverrouillée,
[Fig.5] La figure 5 une vue en coupe selon le plan IV de la figure 3 où le socle complémentaire de connexion électrique est connecté au socle de connexion électrique, le premier levier étant en position verrouillée, et
[Fig.6] La figure 6 représente l'engagement du premier levier avec le deuxième levier.

### Description des modes de réalisation

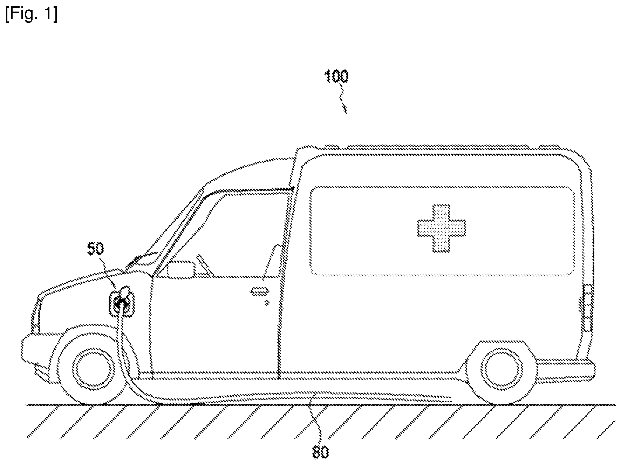

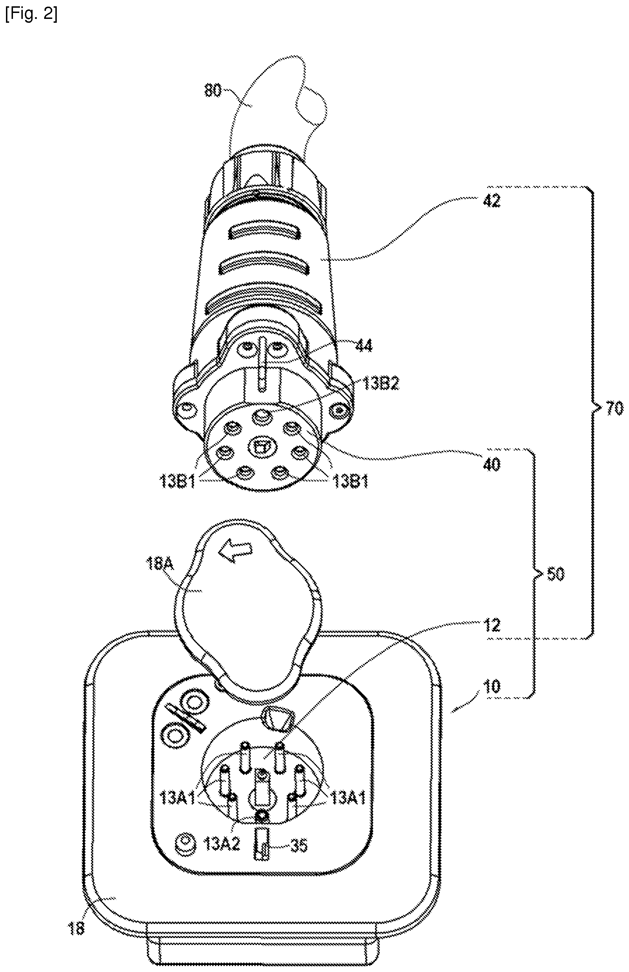

La figure 1 représente un véhicule 100 équipé d'un ensemble 50, représenté plus en détail sur la figure 2, comprenant un système de socle de connexion électrique 10 présentant un socle de connexion électrique 12, et un socle complémentaire de connexion électrique 40. Sur la figure 1, le socle complémentaire 40 est connecté au socle 12. Dans cet exemple, le socle complémentaire 40 est un socle de prise et est équipé d'une poignée 42, tandis que le socle de connexion 12 est un socle de connecteur. Ainsi, dans cet exemple, le socle complémentaire 40, la poignée 42 et le socle 12 forment un connecteur 70. Le véhicule 100 est alimenté en électricité par le câble 80 via l'ensemble 50.

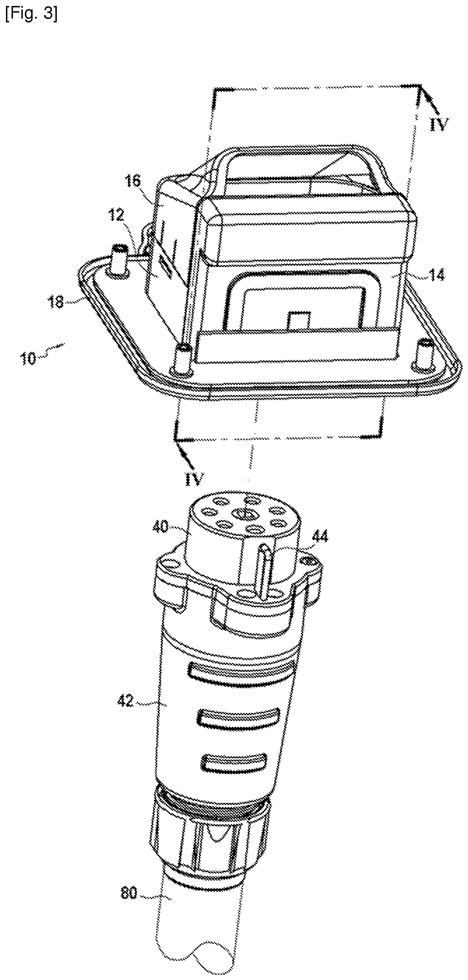

Les figures 2 et 3 représentent l'ensemble 50 en perspective en position déconnectée. Le socle de prise 40 est un socle de prise à contact en bout, et présente un élément de verrouillage 44 configuré pour coopérer avec le système de socle de connecteur 10 de sorte à verrouiller la connexion entre le socle de prise 40 et le socle de connecteur 12. Le système de socle de connecteur 10 comprend le socle de connecteur 12, qui est un socle de connecteur à contact en bout, et un mécanisme de verrouillage commandé 14. On note que dans cet exemple, en plus de présenter des raccords 13A1/13B1de lignes de courant électrique de puissance, les socles présentent également des raccords de pneumatique 13A2/13B2 pour gaz sous pression. La présence d'autres raccords, par exemple électriques/électroniques pour permettre de raccorder d'autres lignes, comme par exemple des lignes de transfert de données, est également envisageable. Le mécanisme 14 est configuré pour verrouiller/déverrouiller le socle de prise 40 lorsqu'il est connecté avec le socle de connecteur 12. Dans cet exemple, le mécanisme 14 coopérer avec l'élément de verrouillage 44 du socle de prise 40. Dans cet exemple, le système 10 comprend un capot 16 configuré pour protéger les raccords électriques avec le socle de connecteur 12, et une façade avant 18. Dans cet exemple, le socle de connecteur 12, le capot 16, et le mécanisme de verrouillage 14 sont assemblés ensemble l'un avec l'autre. La façade 18 est assemblée avec le socle de connecteur 12 et avec le mécanisme de verrouillage 14, et sert au montage du système 10 sur un bâti, par exemple le véhicule 100. On note que la façade 18 présente un capot de protection 18A, qui permet de protéger les broches du socle de connecteur 12 lorsqu'aucun socle de prise n'est connecté.

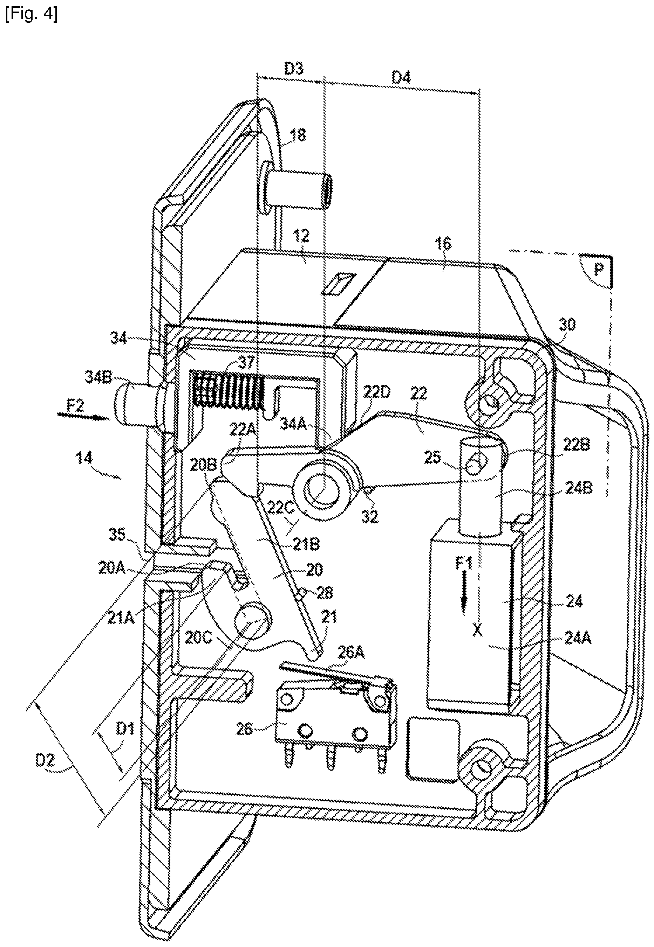

La figure 4 représente plus en détail le mécanisme de verrouillage 14. Le mécanisme 14 présente un premier levier 20, un deuxième levier 22, un électroaimant 24, et un rupteur 26. Dans cet exemple, le premier levier 20, et le deuxième levier 22 sont mobiles dans un même plan P tandis que l'électroaimant 24, et plus particulièrement dans cet exemple l'axe X de la bobine 24A de l'électroaimant 24, s'étend dans le plan P.

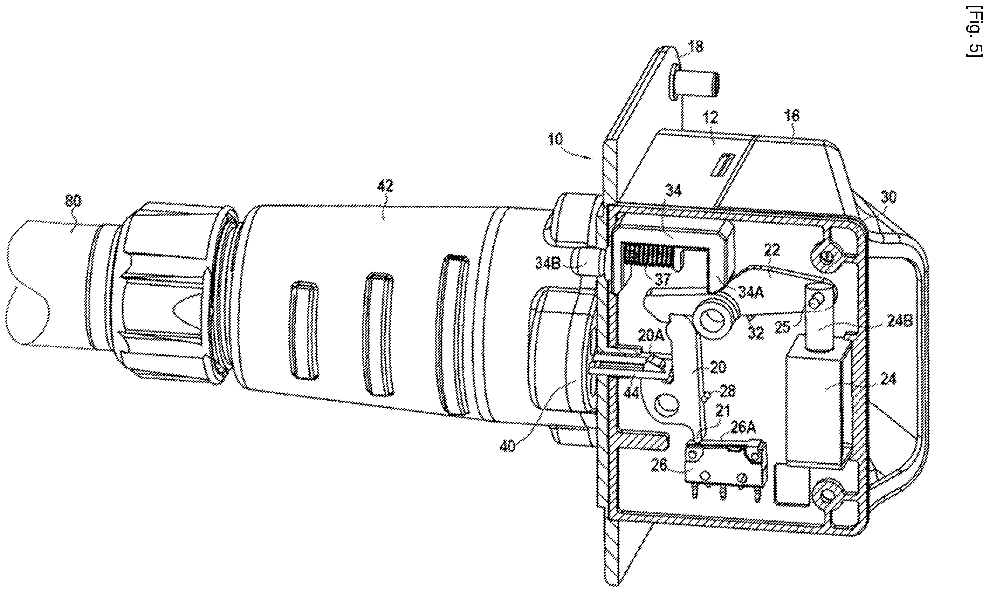

Le premier levier 20 forme un loquet mobile entre une position, de verrouillage (voir figure 5) et une position de déverrouillage (voir figure 4). Le premier levier 20 présente une première extrémité distale 20A configurée pour coopérer avec un socle de prise 40, par exemple avec l'élément de verrouillage 44, et une deuxième extrémité distale 20B configurée pour coopérer avec le deuxième levier 22. Le premier levier 20 présente un premier axe de rotation 20C autour duquel le premier levier 20 pivote. Dans cet exemple, la première extrémité distale 20A et la deuxième extrémité distale 20B sont disposées du même côté par rapport au premier axe de rotation 20C. Dans cet exemple, le premier levier 20 a sensiblement une forme de « U », l'axe de rotation 20C étant disposé dans la base de la forme en « U ». La forme en « U » présente un premier bras 21A présentant la première extrémité distale 20A et un deuxième bras 21B présentant la deuxième extrémité distale 20B. Toute autre forme de levier est envisageable pour le premier levier 20.

Dans cet exemple, la distance D1 entre la première extrémité distale 20A et le premier axe de rotation 20C est plus petite que la distance D2 entre la deuxième extrémité distale 20B et le premier axe de rotation 20C. Dans cet exemple, D2 est supérieur à trois fois D1. Plus précisément, dans cet exemple D1 = 8,5 mm et D2 = 32,5 mm.

Le premier levier 20 présente un ergot 21 configuré pour coopérer avec une languette 26A du rupteur 26, grâce à quoi le rupteur 26 coupe le circuit d'alimentation électrique (non représenté) de l'électroaimant 24 lorsque le premier levier 20 est dans la position de déverrouillage et ferme le circuit d'alimentation électrique de l'électroaimant 24 lorsque le premier levier 20 est dans sa position de verrouillage. Dans cet exemple, l'ergot 21 appuie sur la languette 26A en position de verrouillage et n'appuie pas sur la languette 26A en position de déverrouillage. En d'autres termes, en position de repos, le rupteur 26 est configuré pour ouvrir le circuit d'alimentation électrique de l'électroaimant 24.

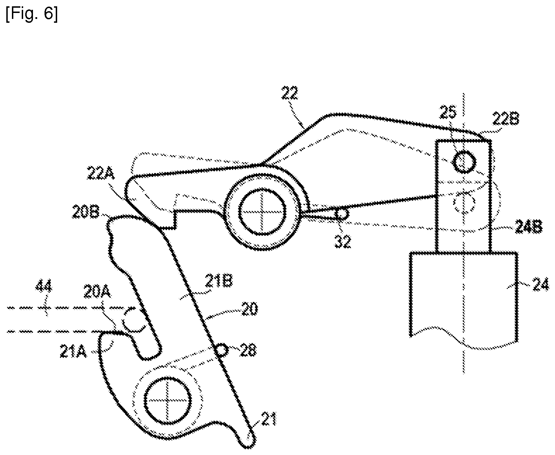

Le premier levier 20 est monté sur un premier élément de rappel 28, dans cet exemple un ressort à torsion 28, dont une extrémité coopère avec un carter 30 et une extrémité coopère avec le levier 20 (voir aussi figure 6). Le premier élément de rappel 28 tend à ramener le premier levier 20 de la position de verrouillage à la position de déverrouillage.

Le deuxième levier 22 présente une troisième extrémité distale 22A formant crochet et configurée pour coopérer avec le premier levier 20 en position de verrouillage, dans cet exemple avec la première extrémité distale 20A du premier levier 20. Le deuxième levier 22 est mobile entre une position de crochetage (figure 4 et 5, position en trait continu sur la figure 6) dans laquelle il est configuré pour bloquer le premier levier 20 en position de verrouillage et une position de libération (position en trait discontinu sur la figure 6) dans laquelle il est configuré pour libérer le premier levier 20. Dans cet exemple le premier levier 20 et le deuxième levier 22 coopèrent directement.

Le deuxième levier 22 présente une quatrième extrémité distale 22B couplée avec l'électroaimant 24. Le deuxième levier 22 présente un deuxième axe de rotation 22C autour duquel le deuxième levier 22 pivote. Dans cet exemple, la troisième extrémité distale 22A et la quatrième extrémité distale 22B sont disposées à l'opposée l'une de l'autre par rapport au deuxième axe de rotation 22C. Dans cet exemple, le deuxième levier 22 a une forme sensiblement rectiligne. Toute autre forme de levier est envisageable pour le deuxième levier 22.

Dans cet exemple, la distance D3 entre la troisième extrémité distale 22A et le deuxième axe de rotation 22C est plus petite que la distance D4 entre la quatrième extrémité distale 22B et le deuxième axe de rotation 22C. Dans cet exemple, D4 est supérieur à deux fois D3. Plus précisément, dans cet exemple D3 = 11,5 mm et D4 = 27,1 mm.

Le deuxième levier 22 est monté sur un deuxième élément de rappel 32, dans cet exemple un ressort à torsion 32, dont une extrémité coopère avec le carter 30 et une extrémité coopère avec le levier 22. Le deuxième élément de rappel 32 tend à ramener le deuxième levier 22 de la position de libération à la position de crochetage.

L'électroaimant 24 présente une bobine 24A d'axe X et une tige coulissante 24B s'étendant en partie au sein de la bobine 24A et couplé via une broche 25 avec la quatrième extrémité distale 22B du deuxième levier 22. Quand on active l'électroaimant 24, i.e. lorsqu'on l'alimente en courant électrique, la tige 24B est déplacée, dans cet exemple la tige 24A est tirée vers l'intérieur de la bobine 24B selon la flèche F1 (voir figure 4), selon l'axe X. Ceci a pour effet de faire pivoter le deuxième levier 22, grâce à quoi le deuxième levier 22 passe de la position de crochetage à la position de libération, ce qui a pour conséquence de libérer le premier levier 20 lorsque celui-ci est en position de verrouillage. Dans cet exemple l'électroaimant 24 a un facteur de marche de 6%.

Le mécanisme de verrouillage 14 comprend une commande manuelle mécanique de déverrouillage 34, dans cet exemple un poussoir 34. Le poussoir 34 présente une came 34A configurée pour coopérer avec une surface de came 22D du deuxième levier 22. Ainsi, lorsqu'on pousse manuellement le poussoir 34 via le bouton 34B selon la flèche F2 (voir figure 4), la came 34A appuie sur la surface de came 22D, ce qui a pour effet de déplacer le deuxième levier 22 depuis la position de crochetage vers la position de libération, ce qui a pour conséquence de libérer le premier levier 20 lorsque celui-ci est en position de verrouillage. On peut ainsi déplacer le premier levier 20 de la position de verrouillage vers la position de déverrouillage. Un ressort de rappel 37 permet de ramener le poussoir 34 en position initiale, à savoir la position où la came 34A permet au deuxième levier 22 rester en position de crochetage.

Lors de la connexion du socle de connecteur 12 avec le socle de prise 40, l'élément de verrouillage 44 s'engage avec le premier levier 20. Dans cet exemple, le premier levier 20, qui est par défaut dans la position de déverrouillage grâce au premier élément de rappel 28, présente l'ouverture de la forme en « U » orientée vers l'orifice d'insertion 35 du carter 30 configuré pour recevoir l'élément de verrouillage 44. Ainsi, pendant l'insertion de l'élément de verrouillage44, ce dernier s'engage au sein du « U » du premier levier 20, et pousse le deuxième bras 20B tandis que le premier bras 20A s'engage avec l'élément de verrouillage 44. Ceci est représenté sur la figure 6. Le premier levier 20 passe ainsi de la position de déverrouillage à la position de verrouillage, dans laquelle le premier levier 20 verrouille le socle de prise 40 en connexion avec le socle de connecteur 12. Dans cet exemple, le premier bras 21A coopère avec l'élément de verrouillage 44, et est engagée dans la boucle formée par l'élément de verrouillage 44, de manière à bloquer l'élément de verrouillage 44, et donc le socle de prise 40.

En passant de la position de déverrouillage à la position de verrouillage, la deuxième extrémité distale 20B du premier levier 20 coopère avec la troisième extrémité distale 22A du deuxième levier 22, qui est poussé depuis la position de crochetage vers la position de libération (position en trait discontinu sur la figure 6), grâce à quoi la deuxième extrémité 20B s'engage avec la troisième extrémité 22A. Cette dernière formant crochet, elle crochète la deuxième extrémité distale 20B en revenant dans la position de crochetage, sa position par défaut grâce à l'élément de rappel 32. Cette configuration est représentée sur la figure 5.

Le premier levier 20 est ainsi maintenu en position de verrouillage par le deuxième levier 22. Dans cette position l'ergot 21 appuie sur la languette 26A du rupteur 26, grâce à quoi le circuit d'alimentation électrique de l'électroaimant 24 est fermé. Il devient donc possible d'actionner l'électroaimant 24.

Selon un premier exemple, pour déverrouiller le socle de prise 40, l'électroaimant 24 est actionné, i.e. il est alimenté en courant électrique, par exemple lorsque le véhicule 100 est démarré. La tige 24B tire alors sur le deuxième levier 22, qui passe en position de libération, ce qui a pour effet de libérer le premier levier 20. L'élément de verrouillage 44 n'est alors plus verrouillé par le premier levier 20, le socle de prise 40 est éjecté du socle de connecteur 12 grâce aux ressorts non représentés des contacts en bout. L'élément 44 se dégage ainsi du premier levier 20, et ce dernier est ramené en position de déverrouillage par l'élément de rappel 28. L'ergot 21 cesse alors de coopérer avec la languette 26A du rupteur 26, ce dernier coupant ainsi l'alimentation électrique de l'électroaimant 24. La tige 24B redevient libre de mouvement selon la direction axiale X, et le deuxième élément de rappel 32 ramène le deuxième levier 22 en position de crochetage. Cette configuration est représentée sur la figure 4.

Selon un deuxième exemple, pour déverrouiller le socle de prise 40, la commande manuelle 34 est actionnée, i.e. on appuie manuellement sur le bouton 34B. Ceci a pour effet de déplacer le deuxième levier 22 en position de libération. Ensuite, de manière similaire à ce qui a été décrit dans le cadre du premier exemple, le premier levier 20 revient en position de déverrouillage et le socle de prise 40 est éjecté. Lorsqu'on relâche la pression exercée sur le bouton 34B, ce dernier retourne dans sa position initiale grâce au ressort 37 et le deuxième levier 22 revient en position de crochetage grâce au deuxième élément de rappel 32.

Bien que la présente invention ait été décrite en se référant à des modes de réalisation spécifiques, il est évident que des modifications et des changements peuvent être effectués sur ces exemples sans sortir de la portée générale de l'invention telle que définie par les revendications. En particulier, des caractéristiques individuelles des différents modes de réalisation illustrés/mentionnés peuvent être combinées dans des modes de réalisation additionnels. Par conséquent, la description et les dessins doivent être considérés dans un sens illustratif plutôt que restrictif.

Par exemple, le socle de connexion électrique 12 peut être un socle de prise au lieu d'être un socle de connecteur tandis que le socle complémentaire de connexion électrique 40 peut être un socle de connecteur au lieu d'être un socle de prise. Selon un autre exemple, les socles peuvent être du type à contact alvéolaire plutôt qu'à contact en bout.

## Revendications

1. Système de socle de connexion électrique (10)
comprenant un socle de connexion électrique (12) et un mécanisme de verrouillage commandé (14) configuré pour verrouiller/déverrouiller un socle complémentaire de connexion électrique (40) connecté avec le socle de connexion électrique (12) , le mécanisme de verrouillage (14) comprenant au moins un premier levier (20) et un deuxième levier (22), et un électroaimant (24), le premier levier (20) formant un loquet mobile entre une position de verrouillage et une position de déverrouillage tandis que le deuxième levier (22) est mécaniquement couplé à l'électroaimant (24) et coopère avec le premier levier (20), grâce à quoi un actionnement de l'électroaimant (24) permet de déplacer le premier levier (20) depuis la position de verrouillage vers la position de déverrouillage,
**caractérisé en ce que** le mécanisme de verrouillage (14) comprend un rupteur (26) configuré pour couper un circuit d'alimentation électrique de l'électroaimant (24) lorsque le premier levier (20) est en position de déverrouillage et pour connecter l'électroaimant (24) au circuit d'alimentation électrique lorsque le premier levier (20) est en position de verrouillage.

2. Système de socle de connexion électrique (10) selon la revendication 1, dans lequel l'actionnement de l'électroaimant (24) permet de déplacer le premier levier (20) uniquement depuis la position de verrouillage vers la position de déverrouillage.

3. Système de socle de connexion électrique (10) selon l'une quelconque des revendications 1 à 2, dans lequel le deuxième levier (22) présente une extrémité distale (22A) formant crochet et configurée pour coopérer avec le premier levier (20) en position de verrouillage, le deuxième levier (22) étant mobile entre une position de crochetage dans laquelle il est configuré pour bloquer le premier levier (20) en position de verrouillage et une position de libération dans laquelle il est configuré pour libérer le premier levier (20).

4. Système de socle de connexion électrique (10) selon l'une quelconque des revendications 1 à 3, dans lequel le premier levier (20) présente une première extrémité distale (20A) configurée pour coopérer avec un socle complémentaire de connexion électrique (40), une deuxième extrémité distale (20B) configurée pour coopérer avec le deuxième levier (22), et un premier axe de rotation (20C), la distance D1 entre la première extrémité distale (20A) et le premier axe de rotation (20C) étant plus petite que la distance D2 entre la deuxième extrémité distale (20B) et le premier axe de rotation (20C), et dans lequel le deuxième levier (22) présente une troisième extrémité distale (22A) configurée pour coopérer avec la deuxième extrémité distale (20B) du premier levier (20), une quatrième extrémité distale (22B) couplée avec l'électroaimant (24), et un deuxième axe de rotation (22C), la distance D3 entre la troisième extrémité distale (22A) et le deuxième axe de rotation (22C) étant plus petite que la distance D4 entre la quatrième extrémité distale (22B) et le deuxième axe de rotation (22C).

5. Système de socle de connexion électrique (10) selon la revendication 4, dans lequel 2xD1 < D2, par exemple 3xD1 < D2, tandis que 2xD3 < D4.

6. Système de socle de connexion électrique (10) selon l'une quelconque des revendications 1 à 5, dans lequel le mécanisme de verrouillage (14) comprend un premier élément de rappel (28) configuré pour ramener le premier levier (20) depuis la position de verrouillage vers la position de déverrouillage.

7. Système de socle de connexion électrique (10) selon l'une quelconque des revendications 1 à 6, dans lequel le deuxième levier (22) est mobile entre une position de crochetage dans laquelle il est configuré pour bloquer le premier levier (20) en position de verrouillage et une position de libération dans laquelle il est configuré pour libérer le premier levier (20), le mécanisme de verrouillage (14) comprenant un deuxième élément de rappel (32) configuré pour ramener le deuxième levier (22) depuis la position de libération vers la position de crochetage.

8. Système de socle de connexion électrique (10) selon l'une quelconque des revendications 1 à 7, dans lequel l'électroaimant (24) présente un facteur de marche inférieur ou égal à 10%.

9. Système de socle de connexion électrique (10) selon l'une quelconque des revendications 1 à 8, dans lequel le mécanisme de verrouillage (14) comprend une commande manuelle mécanique de déverrouillage (24) configurée pour déplacer le premier levier (20) depuis la position de verrouillage vers la position de déverrouillage.

10. Ensemble (50) comprenant un système de socle de connexion électrique (10) selon l'une quelconque des revendications 1 à 9, et un socle complémentaire de connexion électrique (40), le socle complémentaire de connexion électrique (40) comprenant un élément de verrouillage (44) configuré pour coopérer avec le premier levier (20) lorsque le socle complémentaire de connexion électrique (40) est connecté avec le socle de connexion électrique (10) afin de verrouiller la connexion entre le socle complémentaire de connexion électrique (40) et le socle de connexion électrique (10).

## Patentansprüche

1. Elektrisches Anschlussdosensystem (10), umfassend eine elektrische Anschlussdose (12) und einem gesteuerten Verriegelungsmechanismus (14), der konfiguriert ist, um einen komplementären elektrischen Anschlussstecker (40), der mit der elektrischen Anschlussdose (12) verbunden ist, zu verriegeln/entriegeln, der Verriegelungsmechanismus (14) umfassend mindestens einen ersten Hebel (20) und einen zweiten Hebel (22), und einen Elektromagneten (24), wobei der erste Hebel (20) eine Klinke bildet, die zwischen einer Verriegelungsposition und einer Entriegelungsposition bewegbar ist, während der zweite Hebel (22) mechanisch mit dem Elektromagneten (24) gekoppelt ist und mit dem ersten Hebel (20) zusammenwirkt, wodurch eine Betätigung des Elektromagneten (24) es ermöglicht, den ersten Hebel (20) aus der Verriegelungsposition in die Entriegelungsposition zu bewegen,
**dadurch gekennzeichnet, dass** der Verriegelungsmechanismus (14) einen Unterbrecher (26) umfasst, der konfiguriert ist, um einen Stromversorgungskreislauf des Elektromagneten (24) zu unterbrechen, wenn der erste Hebel (20) in der Entriegelungsposition ist und um den Elektromagneten (24) mit dem Stromversorgungskreislauf zu verbinden, wenn der erste Hebel (20) in der Verriegelungsposition ist.

2. Elektrisches Anschlussdosensystem (10) nach Anspruch 1, wobei es die Betätigung des Elektromagneten (24) ermöglicht, den ersten Hebel (20) nur aus der Verriegelungsposition in die Entriegelungsposition zu bewegen.

3. Elektrisches Anschlussdosensystem (10) nach einem der Ansprüche 1 bis 2, wobei der zweite Hebel (22) ein distales Ende (22A) aufweist, das einen Haken bildet und konfiguriert ist, um in Verriegelungsposition mit dem ersten Hebel (20) zusammenzuwirken, wobei der zweite Hebel (22) zwischen einer Einhakposition, in der er konfiguriert ist, um den ersten Hebel (20) in der Verriegelungsposition zu blockieren, und einer Freigabeposition, in der er konfiguriert ist, um den ersten Hebel (20) freizugeben, bewegbar ist.

4. Elektrisches Anschlussdosensystem (10) nach einem der Ansprüche 1 bis 3, wobei der erste Hebel (20) ein erstes distales Ende (20A), das konfiguriert ist, um mit einem komplementären elektrischen Anschlussstecker (40) zusammenzuwirken, ein zweites distales Ende (20B), das konfiguriert ist, um mit dem zweiten Hebel (22) zusammenzuwirken, und eine erste Drehachse (20C) aufweist, wobei der Abstand D1 zwischen dem ersten distalen Ende (20A) und der ersten Drehachse (20C) kleiner ist als der Abstand D2 zwischen dem zweiten distalen Ende (20B) und der ersten Drehachse (20C), und wobei der zweite Hebel (22) ein drittes distales Ende (22A), das konfiguriert ist, um mit dem zweiten distalen Ende (20B) des ersten Hebels (20) zusammenzuwirken, ein viertes distales Ende (22B), das mit dem Elektromagneten (24) gekoppelt ist, und eine zweite Drehachse (22C) aufweist, wobei der Abstand D3 zwischen dem dritten distalen Ende (22A) und der zweiten Drehachse (22C) kleiner ist als der Abstand D4 zwischen dem vierten distalen Ende (22B) und der zweiten Drehachse (22C).

5. Elektrisches Anschlussdosensystem (10) nach Anspruch 4, wobei 2xD1 < D2, beispielsweise 3xD1 < D2, während 2xD3 < D4.

6. Elektrisches Anschlussdosensystem (10) nach einem der Ansprüche 1 bis 5, wobei der Verriegelungsmechanismus (14) ein erstes Rückholelement (28) umfasst, das konfiguriert ist, um den ersten Hebel (20) aus der Verriegelungsposition in die Entriegelungsposition zurückzuholen.

7. Elektrisches Anschlussdosensystem (10) nach einem der Ansprüche 1 bis 6, wobei der zweite Hebel (22) zwischen einer Hakenposition, in der er konfiguriert ist, um den ersten Hebel (20) in der Verriegelungsposition zu blockieren, und einer Freigabeposition, in der er konfiguriert ist, um den ersten Hebel (20) freizugeben, bewegbar ist, der Verriegelungsmechanismus (14) umfassend ein zweites Vorspannelement (32), das konfiguriert ist, um den zweiten Hebel (22) aus der Freigabeposition in die Einhakposition zurückzuholen.

8. Elektrisches Anschlussdosensystem (10) nach einem der Ansprüche 1 bis 7, wobei der Elektromagnet (24) eine Einschaltdauer von 10 % oder weniger aufweist.

9. Elektrisches Anschlussdosensystem (10) nach einem der Ansprüche 1 bis 8, wobei der Verriegelungsmechanismus (14) eine mechanische manuelle Entriegelungssteuerung (24) umfasst, die konfiguriert ist, um den ersten Hebel (20) aus der Verriegelungsposition in die Entriegelungsposition zu bewegen.

10. Anordnung (50), umfassend ein elektrisches Anschlussdosensystem (10) nach einem der Ansprüche 1 bis 9 und einen komplementären elektrischen Anschlussstecker (40), der komplementäre elektrische Anschlussstecker (40) umfassend ein Verriegelungselement (44), das konfiguriert ist, um mit dem ersten Hebel (20) zusammenzuwirken, wenn der komplementäre elektrische Anschlussstecker (40) mit der elektrischen Anschlussdose (10) verbunden ist, um die Verbindung zwischen dem komplementären elektrischen Anschlussstecker (40) und der elektrischen Anschlussdose (10) zu verriegeln.

## Claims

1. An electrical connection mount system (10) comprising an electrical connection mount (12) and a controlled locking mechanism (14) configured to lock/unlock a complementary electrical connection mount (40) connected with the electrical connection mount (12), the locking mechanism (14) comprising at least one first lever (20) and one second lever (22), and an electromagnet (24), the first lever (20) forming a latch which is movable between a locking position and an unlocking position, while the second lever (22) is mechanically coupled to the electromagnet (24) and cooperates with the first lever (20), whereby actuation of the electromagnet (24) allows moving the first lever (20) from the locking position to the unlocking position,
**characterized in that** the locking mechanism (14) comprises a circuit breaker (26) configured to cut an electrical power supply circuit of the electromagnet (24) when the first lever (20) is in the unlocking position and to connect the electromagnet (24) to the electrical power supply circuit when the first lever (20) is in the locking position.

2. The electrical connection mount system (10) according to claim 1, wherein the actuation of the electromagnet (24) only allows moving the first lever (20) from the locking position to the unlocking position.

3. The electrical connection mount system (10) according to any one of claims 1 to 2, wherein the second lever (22) has a distal end (22A) forming a hook and configured to cooperate with the first lever (20) in the locking position, the second lever (22) being movable between a hooking position in which it is configured to block the first lever (20) in the locking position, and a liberation position wherein it is configured to free the first lever (20).

4. The electrical connection mount system (10) according to any one of claims 1 to 3, wherein the first lever (20) has a first distal end (20A) configured to cooperate with a complementary electrical connection mount (40), a second distal end (20B) configured to cooperate with the second lever (22), and a first axis of rotation (20C), the distance D1 between the first distal end (20A) and the first axis of rotation (20C) being smaller than the distance D2 between the second distal end (20B) and the first axis of rotation (20C), and wherein the second lever (22) has a third distal end (22A) configured to cooperate with the second distal end (20B) of the first lever (20), a fourth distal end (22B) coupled with the electromagnet (24), and a second axis of rotation (22C), the distance D3 between the third distal end (22A) and the second axis of rotation (22C) being smaller than the distance D4 between the fourth distal end (22B) and the second axis of rotation (22C).

5. The electrical connection mount system (10) according to claim 4, wherein 2xD1 < D2, for example 3xD1 < D2, while 2xD3 < D4.

6. The electrical connection mount system (10) according to any one of claims 1 to 5, wherein the locking mechanism (14) comprises a first return element (28) configured to return the first lever (20) from the locking position to the unlocking position.

7. The electrical connection mount system (10) according to any one of claims 1 to 6, wherein the second lever (22) is movable between a hooking position in which it is configured to block the first lever (20) in the locking position and a liberation position in which it is configured to free the first lever (20), the locking mechanism (14) comprising a second return element (32) configured to return the second lever (22) from the liberation position to the hooking position.

8. The electrical connection mount system (10) according to any one of claims 1 to 7, wherein the electromagnet (24) has a duty factor less than or equal to 10%.

9. The electrical connection mount system (10) according to any one of claims 1 to 8, wherein the locking mechanism (14) comprises a manual mechanical unlocking control (24) configured to move the first lever (20) from the locking position to the unlocking position.

10. An assembly (50) comprising an electrical connection mount system (10) according to any one of claims 1 to 9, and a complementary electrical connection mount (40), the complementary electrical connection mount (40) comprising a locking element (44) configured to cooperate with the first lever (20) when the complementary electrical connection mount (40) is connected with the electrical connection mount (10) in order to lock the connection between the complementary electrical connection mount (40) and the electrical connection mount (10).
